# EUROPEAN PATENT APPLICATION

(11) **EP 2 277 963 A2**
(43) Date of publication of application: **26.01.2011**
(21) Application number: 09746769.0
(22) Date of filing: 14.05.2009
(51) Int. Cl.: C09D 163/02

(54) **RESIN COMPOSITION FOR PRECOATED STEEL SHEET HAVING EXCELLENT WORKABILITY, HEAT RESISTANCE AND CORROSION RESISTANCE, AND PRECOATED STEEL SHEET MANUFACTURED USING SAME**

(30) Priority: 16.05.2008 KR 20080045426
(71) Applicant: Posco, Pohang Kyungsangbook-do 790-300 (KR)
(72) Inventor: LEE, Jae-Soon, Jeollanam-do 545-711 (KR); CHO, Jae-Dong, Jeollanam-do 545-711 (KR); LEE, Jae-Ryung, Jeollanam-do 545-711 (KR); CHO, Yong-Kyun, Jeollanam-do 545-711 (KR)
(74) Representative: Zech, Stefan Markus
(86) International application number: PCT/KR2009/002569
(87) International publication number: WO 2009/139590

(57) **Abstract**

A resin composition for a pre-coated steel sheet having good processibility, heat resistance, and corrosion resistance, and a pre-coated steel sheet fabricated by using the resin composition are disclosed. The resin composition includes a 10 to 40 parts by weight of a hardener comprising end-capped blocked polyisocyanate and a melamine resin by 2:1 to 3:1 by parts by weight and 0.1 to 10 parts by weight of organized layered nano-clay, based on a 100 parts by weight of a base resin. The pre-coated steel sheet obtained by the method exhibits good processibility, heat resistance, and corrosion resistance.

## Description

### BACKGROUND OF THE INVENTION

### Field of the Invention

The present invention relates to a resin composition for pre-coated steel sheet (or pre-coated steel plate) and a pre-coated steel sheet having excellent processibility, heat resistance and corrosion resistance properties.

### Description of the Related Art

Cold-rolled steel sheets manufactured by steelmakers are a commonly used material for car bodies and components. In general, to manufacture car parts, automotive parts makers process cold-rolled steel sheets to have a desired shape for a specific component, upon which chromate-coating is performed. However, due to the environmental impact of chromate coatings and the related restrictions in their use, a chromium-free solution, a substitute, is in use; however, coating steel sheets using the high-priced chromium-free solution brings about an increase in unit cost.

Various types of steel sheets have been developed by coating multiple resins on zinc or zinc-based alloy coated steel sheets. However, in the case of the steel sheets coated with multiple resins, securing sufficient adhesive force between the steel sheet and the resins when performing deep drawing on parts has proved problematic, and it is also difficult to secure corrosion resistance in these steel sheets after the deep drawing process.

Thus, the development of a steel sheet which is pre-coated and has excellent processibility, heat resistance, and corrosion resistance, so-called pre-coated steel sheet, is required.

The physical properties of the pre-coated steel sheet are greatly affected by the physical properties of the interface between a pre-processing layer and a resin layer, and the resin layer positioned at an upper layer of the steel sheet serves to prevent the infiltration of corrosive agents such as water or oxygen into the steel sheet to thus improve corrosion resistance. If corrosion resistance is not secured, parts of cars, considered to be of the utmost importance in ensuring safety and security would be corroded, causing increased malfunctions and the danger of accidents, so the securing of corrosion resistant is extremely significant.

In addition, because the pre-coated steel sheet is processed in manufacturing parts, it must have good processibility to avoid a phenomenon whereby the resin is detached after molding. Detachment of the resin would facilitate the infiltration of the above-mentioned corrosive agents into the steel sheet, accelerating corrosion and making it impossible to secure corrosion resistance. In addition, a defective, inferior product in appearance is produced. Thus, the adhesive force between the resin layer and the preprocessed layer is crucial also in terms of the processibility of the steel sheet.

As prior art of a composition including nano-clay, Korean Laid Open Publication No. 2005-0117333 (Application No. 2004-0042622) discloses an anti-corrosion coating agent composition using clay. The composition of the anti-corrosion coating agent includes a hardener having an ethylene acrylic acid copolymer and two or more amine groups, which are different from those of the present invention, as the principal ingredients. Also, not only is how the coating agent is coated on a steel sheet not mentioned but also processibility, namely, the purpose of the present invention, is not described, making it difficult to use the coating agent on a steel sheet.

In addition, Korean Laid Open Publication No. 2007-0050709 (Application No. 2005-0108255) discloses a technique that provides an anti-corrosion effect by using a composition containing an organic clay dispersed by using an epoxy resin, a 5 to 80 parts by weight of a hardener having an amine-based functional group, and ultrasonic waves. Unlike the present invention, this technique uses the amine-based compound as the hardener and does not contain any description of the application of the composition to coating of the surface of a steel sheet.

Also, a Korean Laid Open Publication No. 2005-63979 (Application No. 2003-0095238) discloses a resin composition for a pre-shielded steel sheet comprising an epoxy resin, a melamine resin, wax, a polymer-clay nano-composite, and a metallic powder, aiming at improving conductivity. Unlike the present invention, the composition of this technique is directed to providing good weldability and uses melamine solely as the hardener.

### SUMMARY OF THE INVENTION

An aspect of the present invention provides a resin composition for a pre-coated steel sheet having excellent processibility, heat resistance, and corrosion resistance, and a pre-coated steel sheet manufactured by using the resin composition.

According to an aspect of the present invention, there is provided, as a first aspect, a resin composition for a pre-coated steel sheet comprising 10 to 40 parts by weight of a hardener comprising end-capped blocked polyisocyanate and a melamine resin by 2:1 to 3:1 by parts by weight and 0.1 to 10 parts by weight of organized layered nano-clay, based on 100 parts by weight of a base resin that can be dispersed in an organic solvent of an epoxy resin or phenoxy resin prepared from epichlorohydrin and bisphenol A or their mixture.

As a second aspect, the epoxy resin may have a number-average molecular weight of 2,500 to 10,000, and the phenoxy resin may have a number-average molecular weight of 2,500 to 50,000.

As a third aspect, the organic solvent may be one or more selected from the group consisting of alcohol, ketone, ether, an aromatic compound, an aliphatic hydrocarbon, and amine.

As a fourth aspect, the organized layered nano-clay is selected from the group consisting of an amine-based clay having the number of carbons of 14 to 20, a tallow ammonium clay whose end has been substituted by hydroxyl, benzyl, or methyl, and a polyoxymethylene clay whose end has been substituted by an amine group, or their mixture.

As a fifth aspect, the resin composition for a pre-coated steel sheet may further comprise: 20 to 40 parts by weight of silica and 5 to 30 parts by weight of wax based on the content of the base resin.

As a sixth aspect, a pre-coated steel sheet comprises a resin-coated film formed from the resin composition.

As a seventh aspect, the resin-coated film may have a dried film thickness ranging from 1µm to 15µm.

As an eighth aspect, the resin-coated film may be formed on one of surface-treated layers including a chromium-free coating film, a physically or chemically deposited SiOx layer, and phosphate-treated layer.

### DETAILED DESCRIPTION OF THE PREFERRED EMBODIMENT

Exemplary embodiments of the present invention will now be described in detail

In order to secure physical properties such as processibility, heat resistance, corrosion resistance, and the like, it is required that a pre-coated steel sheet retain an adhesive force between a pretreating layer and a resin layer. Thus, in the present invention, a resin including one or more selected from an epoxy resin or phenoxy resin produced from epichlorohydrin and bisphenol A, which are a polar group, and dispersed in an organic solvent is used as a base resin. The polar group of the epoxy and phenoxy may react with an oxide layer on the surface of the steel sheet to secure adhesive force.

As the base resin comprising one or more selected from the epoxy resin and the phenoxy resin produced from epichlorohydrin and bisphenol A and dispersed in an organic solvent, an epoxy resin having a number-average molecular weight of 2,500 to 10,000 or a phenoxy resin having a number-average molecular weight of 2, 500 to 50, 000 may be used. If the number-average molecular weight of the epoxy resin or the phenoxy resin is less than 2,500, a crosslinking density is too high to have a proper processibility, and after processing, corrosion resistance is weak. Meanwhile, the phenoxy resin is more expensive than the epoxy resin. Because the phenoxy resin exhibits superior solution stability and physical properties at a higher molecular weight compared to epoxy resin, the number-average molecular weight of the phenoxy resin is preferably 25,000 or more. If the number-average molecular weight of the epoxy resin exceeds 10,000, or if the number-average molecular weight of the phenoxy resin exceeds 50,000, the denseness of a film of paint would be reduced to weaken corrosion resistance, the viscosity of the composition would increase to make it difficult to obtain uniform coating, the workability during manufacturing process would be degraded, and costs for cleaning with respect to production facilities would increase to incur a greater production unit cost. Thus, the epoxy resin or the phenoxy resin may have the mentioned number-average molecular weight.

The base resin may be dispersed in an organic solvent. The organic solvent may include alcohol, ketone, ether, an aromatic compound, an aliphatic hydrocarbon, and amine. The hydrophobicity of the epoxy resin or the phenoxy resin, the base resin, increases as the molecular weight of the epoxy resin or the phenoxy resin increases, and in order to dissolve the hydrophobic base resin, an organic solvent with a reactor may be used.

As a hardener of the composition according to the exemplary embodiment of the present invention, a mixture obtained by mixing end-capped blocked polyisocyanate and a melamine resin may be used. The use of the mixture of the end-capped blocked polyisocyanate and the melamine resin can achieve good processibility, heat resistance and corrosion resistance.

For the hardener, the end-capped blocked polyisocyanate and the melamine resin are mixed in the ratio of 2:1 to 3:1 by parts by weight. If the content of the melamine is less then the range, the content of the end-capped blocked polyisocyanate in the hardened would increase to cause the resin coated film having an excessive ductility, degrading physical properties such as hardness, whereas if the content of the end-capped blocked polyisocyanate is less than the range, the resin coated film would have insufficient ductility to be detached, and then the resin composition would fail to provide good processibility. Thus, the hardener is used with the mixture within the above-mentioned range to obtain a surface-treated composition with good processibility, heat resistance, solution stability, and corrosion resistance.

The hardener may be limited to 10 to 40 parts by weight based on 100 parts by weight of the base resin. If the content of the hardener is less than 10 parts by weight, the hardening reaction of the resin coated film does not satisfactorily occur, so it would be difficult to obtain desired physical properties. If the content of the hardener exceeds 40 parts by weight, in spite of the larger amount of hardener, the effect of increasing the hardening reaction can be hardly expected, rather, the excessively input hardener would degrade the stability of the solution and the physical properties of the resin coated film. Thus, the hardener is preferably contained within the above-mentioned range.

The resin composition according to an exemplary embodiment of the present invention comprises an organized layered nano-clay to increase processibility, heat resistance, and corrosion resistance. The inclusion of the organized layered nano-clay can increase ductility, restraining the resin coated film from being detached, so a good level of processibility can be achieved even for deep-drawing car parts having a complicated configuration such as a fuel filter, and even after deep drawing, a good adhesive force between the resin and the steel sheet can be maintained, thus maintaining a desired corrosion resistance.

The organized layered nano-clay may be present in a level of 0.1 to 10 parts by weight based on 100 parts by weight of the base resin. If the organized layered nano-clay is present in a level of less than 0.1 parts by weight, the effect of improving processibility and corrosion resistance cannot be expected, while if the organized layered nano-clay is present in a level of more than 10 parts by weight, nano-clay would lump, thereby causing an elongation effect, degrading the resin adhesive force after formation to result in the deterioration of corrosion resistance.

In addition, the organized layered nano-clay may be added as an inorganic substance to a polymer resin, an organic substance, to advantageously improve heat resistance. The organized layered nano-clay may be selected from the group consisting of an amine-based clay having 14 to 20 carbon atoms, a tallow ammonium clay with an end which has been substituted by hydroxyl (OH-), benzyl, or methyl, and a polyoxymethylene clay with an end which has been substituted by an amine group.

In order to enhance corrosion resistance, the resin composition according to an exemplary embodiment of the present invention may include silica, and in this case, advantageously, silica in a colloid state may be added. The silica may be present in a level of 20 to 40 parts by weight based on 100 parts by weight of the base resin. If the silica is present in a level of less than 20 parts by weight, a desired corrosion enhancement effect would not be sufficient, whereas if the silica is present in a level of more than 40 parts by weight, the silica would cohere to thereby degrade adhesive force.

In addition, in order to improve the lubrication of the steel sheet, wax may be selectively added to the resin composition according to an exemplary embodiment of the present invention. As for the wax, various types of waxes such as polyolefin-based wax, carnauba-based wax, Teflon-based wax, silicon-based wax, and the like, may be used, and in this case, preferably, Teflon-based wax is used because it provides a much greater effect with a smaller amount of application. The Teflon-based wax may be present in a level of 5 to 30 parts by weight to the epoxy resin. If the content of the Teflon-based wax is less than 5 parts by weight, improvement of lubrication performance would be less than expected, failing to sufficiently provide the additional effect of preventing damage to the resin coated film during deep drawing. If, however, the Teflon-based wax is present in a level greater than 30 parts by weight, printability can be hardly secured.

A steel sheet on which the resin composition according to the exemplary embodiment of the present invention is coated is not particularly limited and it may include a zinc-plated steel sheet, a zinc-based alloy plated steel sheet, a stainless steel sheet, or a cold rolled steel sheet.

A method of fabricating a resin pre-coated steel sheet using the resin composition as described above will now be explained in detail.

The method of fabricating a resin pre-coated steel sheet according to an exemplary embodiment of the present invention includes forming a surface-treated layer with a deposit amount of 100~2,000 mg/m² on a steel sheet; and coating the resin composition with a thickness of dried film ranging from 1µm to 15µm, baking, and then cooling the same.

As for the surface-treated layer, any surface treatment method that is generally used in the art to which the present invention pertains may be employed to treat the surface, and specifically, chromium-free coating processing, physically or chemically deposited SiOx layer processing, or phosphate-processing may be performed on the zinc-plated steel sheet, zinc-based alloy plated steel sheet, stainless steel, or cold rolled steel sheet. The amount of the surface-treated layer deposit formed thusly may be 100~2, 000 mg/m² over the dried film.

The resin composition according to the exemplary embodiment of the present invention is coated with a dried film thickness of 1.0µm to 15.0µm on the surface-treated steel sheet. If the dried film thickness is less than 1.0µm, the physical properties such as corrosion resistance are degraded, whereas if the dried film thickness is more than 15.0µm, a portion of the resin may be detached and adsorbed into a mold after processing, degrading the processibility and increasing unit production cost.

The resin composition-coated steel sheet is baked at a temperature ranging from 160°C to 260°C. In this case, if the baking temperature is lower than 160°C, the hardening reaction of the resin would not be sufficient to degrade the physical properties of the coated film, while if the baking temperature is higher than 260°C, the material of the base steel sheet can be altered and the excessive heat would merely be consumed without further performing the hardening reaction, or an over-hardening reaction might be made only to accelerate the detachment of the coated film during processing.

After the baking operation, the steel sheet is cooled through a general method such as water cooling or air cooling to fabricate the pre-coated steel sheet.

The resin pre-coated steel sheet fabricated by the method according to the exemplary embodiment of the present invention has good processibility, heat resistance, and corrosion resistance, removing the necessity of a coating process after formation. Thus, the resin pre-coated steel sheet according to the exemplary embodiment of the present invention can be employed for car parts such as an oil filter, a fuel filter, a motor cover, and the like, in which the corrosion resistance and heat resistance are essential properties.

The present invention will now be described in more detail through exemplary embodiments. However, the present invention is not meant to be limited by such exemplary embodiments.

Embodiment

Embodiment 1

An epoxy resin and a phenoxy resin, made by Bumwoo Co., dispersed in methoxypropanol having the number-average molecular weights described in Table 1 below were used as base resins. As a hardener, a mixture of polyisocyanate of desmodur BL3272 MPA from Bayer and a melamine resin of cymel 325 was used or alternatively, the melamine resin was the sole hardener used. As an organized layered nano-clay, Closite 30B from Southern Clay Product Co. was used. These components are combined according to the content amount of each as shown in Table 1, and in the present exemplary embodiment, the content unit of each component is parts by weight unless otherwise mentioned. After the resin compositions of examples 1 to 25 of the present invention and the comparative examples 1 to 14 were fabricated, their corrosion resistance, heat resistance, solution stability, and processibility were evaluated.

The resin compositions were fabricated with the compositions as shown in examples 1 to 25 of the present invention and the comparative examples 1 to 14 as shown in Table 1 and then left at room temperature for 30 days. After 30 days, the formation or nonformation of gel in the resin compositions were observed (checked) in order to evaluate their solution stability.

□: Gel formed

○: Resin composition partially hardened

: Gel not formed

In order to evaluate corrosion resistance, heat resistance, and processibility, a test sample was fabricated by using a steel sheet and the resin coating formed on the test sample was evaluated.

On a zinc-based alloy plated electro-galvanized steel sheet having a thickness of 1.2mm, plated with a deposit amount of 400g/m2, and chromium-free processed with a deposit amount of 500 to 1000 mg/m², the resin compositions of examples 1 to 21 of the present invention and comparative examples 1 to 19 as shown in Table 1 were coated by using a bar coater such that each had a dried film thickness of 8.0µm, baked at a steel sheet temperature of 230°C, and then cooled through water cooling to fabricate a resin-coated steel sheet sample.

As for the processibility of the resin compositions, the resin-coated steel sheet was cut to have a diameter of 120mm, P340 wash oil was coated thereon to process the steel sheet to have a blank holding force (BHF) of 0.5 ton and a height of 80mm, and the detachment degree of the deep-drawn resin-coated steel sheet was then measured by using a transparent Scotch tape (produced by 3M). The evaluation bases were as follows.

: Detachment of 5% or less compared with Tape area

○: Detachment of 5% to 15% compared with Tape area

□: Detachment of 15% to 30% compared with Tape area

: Detachment of 30% or more compared the Tape area

×: Steel sheet torn when formed

As for corrosion resistance, the processed test sample was treated in 5% of salt water by using a salt spray tester (SST) at 35°C, and the elapsed time at which white rust or red rust was generated was measured and the state of corrosion was inspected. The evaluation bases were as follows:

: Red rust generated after 500 hours

○: Red rust generated within the time range of 300 to 500 hours

□: Red rust generated within the time range of 100 to 300 hours, and white rust generated within 200 hours

: Red rust generated within the time range of 100 to 300 hours, and white rust generated within 100 hours

× : Red rust generated less than 100 hours and white rust generated within 72 hours

As for heat resistance, chrominance was measured, the test sample was put in an oven at 170°C for one hour, and change in chrominance was measured. The evaluation references were as follows:

: Chrominance (compared with pre-processed state) 0.1~0.3

○: Chrominance (compared with pre-processed state) 0.3~0.6

□: Chrominance (compared with pre-processed state) 0.6-1.0

: Chrominance (compared with pre-processed state) 1.0~1.5

×: Chrominance (compared with pre-processed state) 1.5 or higher

**[Table 1]**

| Classification | Resin | | | | Nanoclay | Quality evaluation | | | |
|---|---|---|---|---|---|---|---|---|---|
| | Base resin | | Hardener | | | Corrosion resistance | Heat resistance | Solution stability | Processibility |
| | Type | Molecular weight (Mn) | Type | Content | Content | | | | |
| C. Ex. 1 | | 500 | | 5 | 0 | × | × | ○ | × |
| C. Ex. 2 | | 1000 | | 5 | 3 | | | ○ | |
| C. Ex. 3 | | 1000 | | 10 | 0.1 | | □ | ○ | |
| C. Ex. 4 | | 2000 | | 10 | 3 | □ | □ | ○ | |
| C. Ex. 5 | | 2000 | | 20 | 5 | □ | ○ | ○ | □ |
| C. Ex. 6 | | 2000 | | 20 | 7 | □ | ○ | ○ | □ |
| C. Ex. 7 | | 2500 | | 5 | 3 | □ | □ | □ | □ |
| P. Ex. 1 | | 2500 | | 10 | 0.1 | ○ | □ | ○ | ○ |
| P. Ex. 2 | | 2500 | | 20 | 0.5 | ○ | ○ | ○ | ○ |
| C. Ex. 8 | | 3000 | End-capped blocked polyisocyanate : melamine = 2:1 | 5 | 3 | □ | ○ | ○ | ○ |
| C. Ex. 9 | | 3000 | | 20 | 0 | ○ | □ | □ | ○ |
| P. Ex. 3 | | 3000 | | 30 | 1 | ○ | ○ | ○ | ○ |
| P. Ex. 4 | | 4000 | | 30 | 3 | ○ | ○ | ○ | ○ |
| P. Ex. 5 | | 4000 | | 40 | 5 | ○ | ○ | ○ | ○ |
| P. Ex. 6 | Epoxy resin | 5000 | | 40 | 1 | ○ | ○ | ○ | ○ |
| P. Ex. 7 | | 6000 | | 40 | 3 | ○ | ○ | ○ | ○ |
| P. Ex. 8 | | 7000 | | 40 | 5 | ○ | ○ | | ○ |
| P. Ex. 9 | | 8000 | | 40 | 7 | ○ | ○ | ○ | ○ |
| P. Ex. 10 | | 9000 | | 40 | 10 | ○ | | ○ | ○ |
| P. Ex. 11 | | 10000 | | 40 | 7 | ○ | ○ | ○ | ○ |
| P. Ex. 12 | | 10000 | | 40 | 10 | ○ | ○ | ○ | ○ |
| C. Ex. 10 | | 10000 | | 40 | 12 | □ | □ | □ | □ |
| C. Ex. 11 | | 11000 | | 40 | 5 | □ | | □ | □ |
| C. Ex. 12 | | 11000 | | 45 | 5 | □ | □ | □ | □ |
| C. Ex. 13 | | 3000 | | 10 | 1 | □ | □ | ○ | □ |
| C. Ex. 14 | | 3000 | | 20 | 3 | □ | □ | ○ | □ |
| C. Ex. 15 | | 5000 | Melamine | 20 | 3 | ○ | ○ | ○ | □ |
| C. Ex. 16 | | 5000 | | 30 | 5 | ○ | ○ | ○ | □ |
| C. Ex. 17 | | 7000 | | 30 | 7 | ○ | ○ | ○ | □ |
| C. Ex. 18 | | 7000 | | 40 | 10 | ○ | ○ | ○ | □ |
| P. Ex. 13 | | 2500 | End-capped blocked polyisocyanate : melamine = 3:1 | 30 | 3 | ○ | ○ | ○ | ○ |
| P. Ex. 14 | | 5000 | | 30 | 3 | ○ | ○ | ○ | ○ |
| P. Ex. 15 | | 10000 | | 30 | 3 | ○ | ○ | ○ | ○ |
| P. Ex. 16 | Phenoxy resin | 20000 | | 30 | 3 | ○ | ○ | ○ | ○ |
| P. Ex. 17 | | 30000 | | 30 | 3 | ○ | | | ○ |
| P. Ex. 18 | | 40000 | | 30 | 7 | | | ○ | |
| P. Ex. 19 | | 50000 | | 30 | 7 | ○ | ○ | ○ | ○ |
| C. Ex. 19 | | 55000 | | 30 | 7 | ○ | □ | □ | ○ |
| P. Ex. 20 | Epoxy: Phenoxy = 8:2 | | | 30 | 3 | ○ | | ○ | |
| P. Ex. 21 | Epoxy:Phenoxy = 6:4 | | | 30 | 3 | ○ | ○ | ○ | ○ |

In Table 1, 'C. Ex.' indicates comparative example, and 'P. Ex.' indicates the example of the present invention.

The content of the base resin was 100 parts by weight, and the number-average molecular weight (Mn) of the epoxy resin in the examples 20 and 21 of the present invention was 6,000, and that of the phenoxy was 30,000.

Embodiment 2

The same method as the Embodiment 1 was performed, except that a 25 parts by weight of a hardener (desmodur BL3272 MPA from Bayer) obtained by mixing the end-capped blocked polyisocyanate (desmodur BL3272 MPA from Bayer) and a melamine resin in the ratio of 2 :1 and a 3 parts by weight of an organized layered nano-clay (Southern Clay Product company, 30B) were mixed into a 100 parts by weight of the epoxy base resin having a molecular weight of 6000 and dispersed in methoxypropanol, made by Bumwoo Co., to which wax (Shamrock, fluoroslip 421) and silica (Nissan Chemical Snowtex, ST-PS-M) were added as shown in Table 2 below, based on the results obtained from Embodiment 1, to measure change in the physical properties of the resin compositions over the change in the content of the wax and silica.

**[Table 2]**

| Classification | Resin | Additive | | Quality evaluation | | |
|---|---|---|---|---|---|---|
| | | Wax | Silica | Corrosion resist ance | Heat resistance | processibility |
| C. Ex. 20 | 100 part by weight of epoxy (number-average molecular weight 6000) + 25 parts by weight of a hardener having end-capped blocked polyisocyanate and melamine by 2:1 + 3 parts by weight of nano-clay | 3 | 15 | ○ | ○ | ○ |
| P. Ex. 22 | | 5 | 20 | | | ○ |
| P. Ex. 23 | | 15 | 20 | | | |
| P. Ex. 24 | | 20 | 25 | | | |
| P. Ex. 25 | | 20 | 30 | | | |
| P. Ex. 26 | | 25 | 30 | | | |
| C. Ex. 21 | | 35 | 30 | ○ | ○ | □ |
| P. Ex. 27 | | 25 | 35 | | | |
| P. Ex. 28 | | 25 | 40 | | | |
| C. Ex. 22 | | 25 | 45 | | ○ | □ |
| P. Ex. 29 | | 30 | 40 | | | ○ |
| C. Ex. 23 | | 30 | 45 | ○ | ○ | □ |
| C. Ex. 24 | | 35 | 40 | □ | ○ | ○ |
| C. Ex. 25 | | 35 | 45 | □ | □ | ○ |

In Table 2, 'C. Ex.' indicates comparative example, and 'P. Ex.' indicates the example of the present invention.

As described in Table 2, it is noted that, when 20 to 40 parts by weight of silica and 5 to 30 parts by weight of wax were added to the resin compositions, the physical properties such as corrosion resistance, heat resistance and processibility of Table 1 were further improved.

Embodiment 3

A resin coated layer was formed with the composition according to example 28 of the present invention in Embodiment 2, and the physical properties of the coated layer over a change in the baking temperature and the dried film thickness were evaluated.

In the same manner as that of Embodiment 1, a base steel sheet, namely, a zinc-based alloy plated electro-galvanized steel sheet having a thickness of 1.2mm, plated with a deposit amount of 400g/m² on one surface thereof, and chromium-free processed with a deposit amount of 500 to 1000 mg/m², was resin-coated with dried film thicknesses at baking temperatures as shown in Table 3 below, and then, the heat resistance, processibility and corrosion resistance of the comparative examples and the examples of the present invention were evaluated.

**[Table 3]**

| Classification | Fabrication conditions | | Quality evaluation | | |
|---|---|---|---|---|---|
| | Baking temperature ( ) | Film thickness (µm) | Heat resistance | Processibility | Corrosion resistance |
| C. product 1 | 150 | 6 | □ | □ | |
| P. product 1 | 160 | | ○ | | ○ |
| P. product 2 | 180 | | | | |
| P. product 3 | 200 | | | | |
| P. product 4 | 220 | | | | |
| P. product 5 | 240 | | | | |
| P. product 6 | 250 | | | | |
| P. product 7 | 260 | | | ○ | |
| C. product 2 | 270 | | ○ | □ | □ |
| C. product 3 | 210 | 0.5 | □ | □ | □ |
| C. product 4 | | 0.8 | ○ | □ | ○ |
| P. product 8 | | 1 | | | ○ |
| P. product 9 | | 2 | | | |
| P. product 10 | | 4 | | | |
| P. product 11 | | 6 | | | |
| P. product 12 | | 8 | | | |
| P. product 13 | | 10 | | | |
| P. product 14 | | 12 | | ○ | |
| P. product 15 | | 15 | ○ | ○ | ○ |
| C. product 5 | | 17 | □ | | ○ |

In Table 3, 'C. product' indicates comparative steel sheet, and 'P. product' indicates the steel sheet of the present invention.

As noted from Table 3, corrosion resistance, heat resistance, and processibility were insufficient when the temperature was higher than 260°C as well as when it was lower than 160°C. In addition, it is noted that when the thickness of the coated film was less than 1µm or exceeded 15µm, corrosion resistance, heat resistance, and processibility deteriorated.

Consequently, as noted, when the composition according to the exemplary embodiment of the present invention is coated on a steel plate, most preferably, it is coated with a film thickness of 1µm to 15µm at a baking temperature ranging from 160°C to 260°C.

As set forth above, according to exemplary embodiments of the invention, when the resin composition is coated on one of a zinc-plated steel sheet, zinc-based alloy plated steel sheet, stainless steel, or cold rolled steel sheet which has undergone one of chromium-free coating processing, physically or chemically deposited SiOx layer processing, and phosphate-processing under the condition of a deposit amount of 100~2, 000 mg/m², the corresponding steel sheet can have good heat resistance, corrosion resistance, processibility, and printability, which can be used as a coating-free steel sheet used for car parts.

While the present invention has been shown and described in connection with the exemplary embodiments, it will be apparent to those skilled in the art that modifications and variations can be made without departing from the spirit and scope of the invention as defined by the appended claims.

## Claims

1. A resin composition for a pre-coated steel sheet, comprising 10 to 40 parts by weight of a hardener comprising end-capped blocked polyisocyanate and a melamine resin by 2:1 to 3:1 by parts by weight and 0.1 to 10 parts by weight of organized layered nano-clay, based on 100 parts by weight of a base resin that can be dispersed in an organic solvent of an epoxy resin or phenoxy resin prepared from epichlorohydrin and bisphenol A or their mixture.

2. The resin composition of claim 1, wherein the epoxy resin may have a number-average molecular weight of 2,500 to 10,000, and the phenoxy resin may have a number-average molecular weight of 2,500 to 50,000.

3. The resin composition of claim 1, wherein the organic solvent may be one or more selected from the group consisting of alcohol, ketone, ether, an aromatic compound, an aliphatic hydrocarbon, and amine.

4. The resin composition of claim 1, wherein the organized layered nano-clay is selected from the group consisting of an amine-based clay having the number of carbons of 14 to 20, a tallow ammonium clay whose end has been substituted by hydroxyl, benzyl, or methyl, and a polyoxymethylene clay whose end has been substituted by an amine group, or their mixture.

5. The resin composition of claim 1, wherein the resin composition for a pre-coated steel sheet may further comprise: 20 to 40 parts by weight of silica and 5 to 30 parts by weight of wax based on the content of the base resin.

6. A pre-coated steel sheet comprising a resin-coated film formed from the resin compositions of one of claims 1 to 5.

7. The pre-coated steel sheet of claim 6, wherein the resin-coated film has a dried film thickness ranging from 1µm to 15µm.

8. The pre-coated steel sheet of claim 6, wherein the resin-coated film is formed on one of surface-treated layers including a chromium-free coating film, a physically or chemically deposited SiOx layer, and phosphate-treated layer.
